Europäisches Patentamt

(19) European Patent Office

Office européen des brevets

(11) **EP 1 169 271 B1**

(12) **EUROPEAN PATENT SPECIFICATION**

(45) Date of publication and mention
of the grant of the patent:
**24.03.2004 Bulletin 2004/13**

(51) Int Cl.⁷: **C02F 3/02**, B09C 1/00,
B09C 1/10

(21) Application number: **00926914.3**

(22) Date of filing: **12.04.2000**

(86) International application number:
**PCT/EP2000/003336**

(87) International publication number:
**WO 2000/063127 (26.10.2000 Gazette 2000/43)**

(54) **METHOD OF AQUIFER REMEDIATION**

VERFAHREN ZUR GRUNDWASSERSANIERUNG

PROCEDE D'ASSAINISSEMENT DE NAPPES AQUIFERES

(84) Designated Contracting States:
**AT BE CH CY DE DK ES FI FR GB GR IE IT LI LU MC NL PT SE**

(30) Priority: **14.04.1999 US 129328 P**

(43) Date of publication of application:
**09.01.2002 Bulletin 2002/02**

(73) Proprietor: **SHELL INTERNATIONALE RESEARCH MAATSCHAPPIJ B.V.
2596 HR Den Haag (NL)**

(72) Inventors:
• **JOHNSON, Paul, Carr
Fountain Hills, AZ 85268 (US)**
• **SALANITRO, Joseph, Patrick
Houston, TX 77084 (US)**
• **STEARNS, Steven, Merle
Modesto, CA 95350 (US)**
• **MANER, Paul, Michael
Houston, TX 77084 (US)**
• **MILLER, James, Henry
Katy, TX 77450 (US)**
• **SPINNLER, Gerard, Eugene
Houston, TX 77084 (US)**

(56) References cited:
**US-A- 5 221 159          US-A- 5 277 518
US-A- 5 445 474          US-A- 5 874 001**

## Description

### FIELD OF THE INVENTION

The present invention relates to the remediation of contaminated aquifers.

### BACKGROUND OF THE INVENTION

Over the past decade environmental concerns and regulatory trends have led to gasoline suppliers reformulating their gasoline blends to be cleaner burning, and to have less impact on the atmosphere. To achieve this, gasoline suppliers began to blend their fuels with oxygenated hydrocarbons, such as alkyl ethers. One alkyl ether used quite extensively is methyl t-butyl ether (hereinafter "MTBE"), and unleaded gasoline often comprises up to 10 to 15% by volume of this ether.

Now, having used such oxygenated fuels for several years, it has been suggested that these cleaner-burning fuels may pose a threat to groundwater resources. In particular, many oxygenated hydrocarbons are very soluble in water and are slow to degrade in the environment; hence they tend to accumulate in water resources once released to the environment. For example, MTBE has been detected in groundwater with high frequency in many areas of the U.S.A. and there are well-documented cases of impacts to municipal water supply wells. In some cases these impacts result from accidental gasoline spills; in other cases they are attributed to the re-deposition of chemicals emitted to the atmosphere from partially combusted automobile exhaust.

It is also now known that when alkyl ethers, such as MTBE, are found in the subsurface, then they are largely resistant to biodegradation under natural conditions. This is the main reason for their persistence and accumulation in soil and groundwater.

With the increase in our knowledge of the behavior of these chemicals, and the increase in documented impacts, regulatory agencies are now introducing cleanup standards for alkyl ethers such as MTBE in groundwater. As a result, technologies that can clean-up soil and aquifers contaminated with alkyl ethers such as MTBE and alkyl alcohols such as tertiary butyl alcohol (hereinafter "TBA"), TBA being a transient product formed during the degradation of MTBE are required.

Shallow contaminated soil can be treated by excavating the contaminated soil and then treating it above-ground. However, in most cases, it is preferable to treat contaminated soils in situ so as to minimize disturbance of the site and prevent further release of the contaminants to the atmosphere. Along these lines, the invention described by Visser et al. (U.S. Patents 4,593,760 and 4,660,639) has been used at some MTBE-impacted sites with success. Visser's process relates to the extraction of soil gas vapors from the subsurface. However, this process is limited in applicability to permeable soils located above the water table, and is limited to volatile alkyl ethers. Furthermore, by itself, it is a non-destructive process that must be coupled with above-ground treatment (such as thermal oxidation) if the alkyl ethers and/or alcohols such as MTBE and/or TBA are to be destroyed.

While there is little performance data available, it is thought by practitioners that an aquifer containing contaminated groundwater might be remediated by application of either pump-and-treat technology or in situ air sparging technology. In the former, contaminated groundwater is withdrawn from the aquifer by pumping from groundwater wells and is purified above-ground. Following purification, the groundwater is reinjected to the aquifer or discharged above-ground. A groundwater pump-and-treat system is viewed as both ineffective and expensive because it is maintenance-intensive, operations often are on the scale of decades, and it merely transfers contamination from the aqueous phase to the atmosphere, to a solid medium for later disposal, or to a surface treatment facility. In situ air sparging technology is described by Billings et al. (US Patent No. 5,221,159). In that invention, air is injected in situ into the contaminated groundwater with the hope that groundwater contaminants will be volatilized or that the addition of oxygen will help the aerobic biodegradation of readily biodegradable contaminants. With respect to application to alkyl ethers and TBA, indigenous organisms capable of biodegrading these chemicals are not always present; if they are present, it is usually at such low numbers that the in situ air sparging process can practically only cause the volatilization of the alkyl ethers and/or alkyl alcohols e.g. MTBA and/or TBA. Thus, application of this process would only cause the transfer of alkylethers and TBA from the groundwater to soil gas and the atmosphere. In some cases the vapors are collected and treated above-ground, but above-ground treatment of vapors is typically very expensive and problematic.

US Patent No. 5,874,001 (Carter) discloses a method and apparatus for in situ removal of biodegradable contaminants from groundwater or soil, or both by injecting oxygen gas into groundwater containing a biodegradable contaminant in a volume low enough to avoid migration or volatilization of the contaminant but high enough to enhance the rate of biodegradation of the contaminant. In the detailed description therein, although it is stated that (Column 3, lines 56 to 58) "removal of biodegradable contaminants can be enhanced by injecting microorganisms into the groundwater", the specific example given relies upon naturally present Pseudomonas flourescens type G for biodegradation of MTBE (Column, 6, lines 3 to 5), with oxygen injection for 5 minutes at about 30 minute intervals, at an oxygen pressure of about 1 psi (0.07 Bar) (Column 5, lines 36, 37).

To date, there are no in situ treatment processes known to the practice that result in a satisfactory in situ destruction of the alkyl ethers and alkyl alcohols such as MTBE and/or TBA. There is need, therefore, for a practicable technology that is capable of destroying the target alkyl ethers in situ, and that does not require the withdrawal and above-ground treatment and discharge of fluids.

U.S. Patents 5,750,364 and 5,811,010, assigned to Shell Oil Company, relate to a bacterial culture that aerobically degrades alkyl ethers and alkyl alcohols, such as MTBE and/or TBA to non-toxic carbon dioxide and water. However, in-situ remediation of subsurface chemical contaminants by delivering contaminant-degrading bacteria to the sub-surface (this overall process will hereinafter be referred to as "bio-augmentation") has not historically been embraced by the practice. This is mainly because most soils and aquifers already have sufficient numbers of microorganisms capable of causing substantial biodegradation of readily biodegradable compounds, and therefore addition of other organisms is not warranted. It is also accepted that delivering and maintaining non-indigenous microorganism cultures in the subsurface is a very difficult task.

However, in order to treat aquifers and soils contaminated with more recalcitrant chemicals such as MTBE and/or TBA, there is a need for a bio-augmentation process which is capable of delivering and maintaining non-indigenous microorganism cultures in subsurface soils and groundwater.

## SUMMARY OF THE INVENTION

The present invention provides a method for in situ remediation of an aquifer having a zone through which passes water contaminated with at least one contaminant which is methyl t-butyl ether (MTBE) and/or t-butyl alcohol (TBA), which method comprises, a) delivering to the zone in the aquifer an oxygen-containing gas at a pressure of at least 5 psi (0.35 Bar) above hydrostatic pressure at point of delivery by pulsed injection at a frequency in the range of from once per week to 10 times per day, and b) delivering to the zone in the aquifer a non-indigenous microbial culture capable of degrading the at least one chemical contaminant.

## DETAILED DESCRIPTION OF THE INVENTION

The present invention provides a method for the in - situ remediation of at least one sub-surface chemical contaminant by delivering a microbial culture, preferably a bacterial culture capable of degrading the at least one chemical contaminant at a sub-surface contaminated site. The sub-surface contaminated site may contain contaminated groundwaters and/or it may contain soils contaminated with such contaminated groundwaters. In the sub-surface, contaminated groundwaters and soils contaminated with such groundwaters reside in aquifers. The method of the present invention is capable of successfully delivering and maintaining microorganism cultures in the sub-surface utilizing a network/galleries of culture and/or oxygen-containing stream delivery apparatus.

The present invention further provides a method for remediating in-situ contamination by alkyl ethers, such as MTBE, and/or alkyl alcohols such as TBA in soils and/or groundwaters by delivering to an aquifer containing contaminated soils and/or groundwaters a non-indigeneous bacterial culture capable of degrading MTBE, particularly of degrading MTBE to carbon dioxide and water, and/or degrading TBA.

The method of the present invention may be conveniently employed for the in situ remediation of an aquifer having a zone through which passes water contaminated with at least one contaminant, which method comprises a) delivering to the zone in the aquifer an oxygen-containing gas at a pressure of at least 5 psi (0.35 Bar) above hydrostatic pressure at point of delivery by pulsed injection at a frequency in the range of from once per week to 10 times per day, and b) delivering to the zone in the aquifer a microbial culture capable of degrading the at least one chemical contaminant. Said method is especially suitable for in situ remediation of an aquifer having a zone through which passes water contaminated with methyl t-butyl ether (MTBE) and/or t-butyl alcohol (TBA). In this method, (a) may be initiated before (b), (b) may be initiated before (a), or (a) and (b) may be initiated simultaneously.

The oxygen-containing gas to be delivered to the zone in the aquifer may be provided by at least one source of oxygen-containing gas. The oxygen-containing gas is preferably delivered to the zone in the aquifer at at least one sub-surface gas injection point to create at least one oxygenated zone in the aquifer. The oxygen-containing gas is preferably delivered at the or each sub-surface gas injection point by means of at least one gas injector, connected to the at least one source of oxygen-containing gas, the or each gas injector being located in an oxygen delivery well. Preferably, the or each sub-surface gas injection point is associated with one (i.e. a respective) gas injector. The oxygen-containing gas is delivered to create at least one oxygenated zone in the aquifer conducive to aerobic biodegradation. Within these aerobic zones (oxygenated zones), a bacterial culture capable of degrading the at least one contaminant, preferably one or more alkyl ethers and/or alkyl alcohols such as MTBA and/or TBA, is delivered to create at least one treatment zone. Contaminated groundwater, for example groundwater contaminated with alkyl ethers (such as MTBE) and/or alkyl alcohols (such as TBA) flows from contaminated aquifer soils to the at least one treatment zone. As contaminated groundwater passes through the or each treatment zone, it is purified by biodegradation, and the contaminants, for example alkyl ethers and/or TBA, are converted to non-toxic carbon dioxide and water. Accordingly, a preferred embodiment of the present invention is a method which comprises delivering the oxygen-containing gas to the zone in the aquifer at at least one sub-surface gas injection point to create an oxygenated zone, subsequently delivering the microbial culture to the oxygenated zone to create a treatment zone, and wherein contaminated groundwater passes through the treatment zone and is remediated.

The at least one oxygen-containing gas source may be housed in enclosures. The at least one oxygen-containing gas source may be comprised of air compressors, blowers, or combinations thereof with pressurized gas storage tanks. Alternatively, the at least one oxygen-containing gas source may be comprised of commercially-available oxygen gas generators.

Advantageously, the present invention employs an oxygen-containing gas delivery system designed so as to maintain relatively uniform aerobic conditions in the or each treatment zone, while at the same time minimizing contaminant losses through non-biodegradation loss mechanisms, such as volatilization and dispersion. One non-limiting way for achieving this involves the intermittent pulsed injection of an oxygen-containing gas, such as air or pure oxygen. Thus, pulses of oxygen-containing gas are delivered through the or each gas injector. When operated in this fashion, a portion of the oxygen-containing gas becomes trapped in the aquifer pore spaces and oxygen continuously dissolves into groundwater during the time period between injection pulses. Thus, oxygen is continuously delivered between pulses in a way that eliminates any undesired volatilization losses. In addition, pulsed gas delivery is advantageous in comparison with continuous delivery, because continuous delivery may cause reductions in water permeability to the extent that contaminants flow around, rather than through, the or each treatment zone. In a preferred embodiment of the invention, a network of oxygen delivery wells is operated intermittently so as to maximize aerobic biodegradation while minimizing other non-degrading loss mechanisms (e.g. volatilization, dispersion, etc.).

In a further preferred embodiment an apparatus for delivering oxygen-containing gas in an optimized intermittent mode is employed. The desired injection pressure of the oxygen-containing gas may conveniently be controlled with gas pressure regulators. The injection pressure of the oxygen-containing gas is preferably greater than the hydrostatic head of water in the or each gas injector. To prevent poor gas distribution problems that plague manifolded gas delivery wells, it is preferable that the delivery pressure be at least 10 psig (pound-force/square inch gauge) (0.7 Bar gauge) greater than the hydrostatic head of water. Preferred delivery pressures are in the 20 to 40 psig (1.4 to 2.8 Bar gauge) range. Preferably, at least one gas storage tank is used to store the oxygen-containing gas between injection cycles. The or each gas storage tank is preferably sized to contain the desired gas injection volume at the desired gas injection pressure.

Accordingly, a preferred embodiment of the present invention comprises storing the oxygen-containing gas in at least one gas storage tank and subsequently delivering the oxygen-containing gas at the at least one sub-surface injection point by intermittent pulsed injection. The gas storage tanks are an advantageous feature of the present invention in that they allow short and rapid pulsed delivery of gas not achievable by wells directly connected to blowers, compressors, or other oxygen-generating equipment. Preferably solenoid valves and/or back-flow check valves control the flow of gas from the oxygen-containing gas source to the or each gas injector.

Conveniently, a system monitoring and control system may be employed for optimal operation of the invention. System monitoring may typically comprise a collection of pressure gauges and/or gas flow meters that are used to ensure gas delivery to each gas injector. It is preferred that pressure gauges are employed for each gas storage tank. In addition, it is preferred that groundwater monitoring points and/or dissolved oxygen sensors are used to monitor dissolved oxygen concentrations in the target treatment zone.

Advantageously, based on the data obtained from such monitoring equipment, the frequency and volume of oxygen-containing gas injections may be adjusted through use of a controller associated with said monitoring equipment. This controller may be a simple system of manual valves, but may preferably comprise electronic timers, and may more preferably comprise more complicated automatic control systems integrated with in situ oxygen sensors. In general, to minimize losses from other non-biodegradation mechanisms and to prevent reductions in permeability to groundwater flow through the treatment zone, the frequency of oxygen-containing gas injections is minimized.

Accordingly, a further preferred embodiment of the present invention comprises maintaining relatively uniform aerobic conditions in the treatment zone by monitoring the oxygen flow from the or each gas. storage tank to the or each sub-surface gas injection point using at least one pressure gauge and/or gas flow meter, monitoring dissolved oxygen concentration in the treatment zone using ground water monitoring points and dissolved oxygen sensors, and adjusting the frequency and volume of the intermittent pulsed injections of oxygen-containing gas by means of a controller associated with said monitoring equipment.

The oxygen-containing gas is delivered to the at least one sub-surface gas injection point by means of at least one gas injector. The or each gas injector may take any practicable form but is conveniently constructed from a combination of a first section of perforated and a second section of non-perforated conduit. The non-perforated conduit will preferably extend to below the target treatment zone, and is preferably installed so as to prevent the short-circuiting of oxygen-containing gas out of the zone in the aquifer, for example into a vadose zone. The perforated section of the or each injector is preferably placed below the target treatment zone, and may be aligned either vertically or horizontally. The perforated section may conveniently be aligned vertically and is preferably from 0.25m to 5m, more preferably 0.5m to 2m in length.

The dissolved oxygen concentration (DOC) in the aquifer treated (treatment zone) is preferably maintained at greater than 2 mg/L of the aquifer (groundwater) treated zone, preferably greater than 4 mg/L, more preferably more than 8 mg/l, still more preferably greater than 10 mg/L and most preferably greater than 18 mg/L. Dissolved oxygen concentrations up to about 8 mg/L may be achieved through air or oxygen gas delivery; however higher dissolved oxygen concentrations are conveniently achieved with pulsed oxygen gas delivery.

The pressure of the oxygen-containing gas injected into the zone in the aquifer is at least 5 psig (0.35 Bar gauge), preferably at least 10 psig (0.7 Bar gauge), more preferably at least 20 psig (1.4 Bar gauge), most preferably at least 30 psig (2.1 Bar gauge) above hydrostatic pressure at point of delivery by pulsed injection.

Accordingly, the pressure of the or each oxygen-containing storage tank is preferably at least 5 psig (0.35 Bar gauge), more preferably at least 20 psig (1.4 Bar gauge) and most preferably at least 30 psig (2.1 Bar gauge) above the hydrostatic pressure at the or each sub-surface gas injection point.

As a non-limiting illustrative example, the hydrostatic pressure at the or each injection point is calculated to be approximately 0.5 psig per ft (0.115 Bar per meter) of depth below the water table. At a typical treatment zone, the sub-surface gas injection points are at the depth of 2-20 ft (0.6-6 m), preferably 5-20 ft (1.5-6 m), more preferably 5-10 ft (1.5-3 m) below the water table. Therefore when for example a sub-surface injection point is at a depth from 5-20 ft (1.5-6 m) below the water table the hydrostatic pressure at the injection point is approximately 2.5-10 psig (0.17-0.7 Bar gauge). The injection (storage tank) pressure could then be at least 7.5 psig (0.5 Bar gauge), more preferably at least 15 psig (1 Bar gauge) and most preferably at least 30 psig (2 Bar gauge); preferably in the range 6-60 psig (0.4-4.1 Bar gauge), more preferably in the range 20-40 psig (1.4-2.8 Bar gauge).

To provide adequate oxygen delivery, it is preferable that the space between the oxygen-containing gas injection points is less than 20 ft (6 m), and preferably less than 10 ft (3 m), more preferably less than 7 ft (2.1 m) and most preferably less than 6 ft (1.8 m). As a non-limiting example, the spacing between adjacent injection points in a shallow (less than 30 ft (9 m) depth), relatively homogenous aquifer can be about 3-5 ft (0.9 m - 1.5 m).

A preferred embodiment of the present invention comprises delivering the oxygen-containing gas to the aquifer at at least two sub-surface gas injection points, preferably at at least 10 sub-surface gas injection points, most preferably at at least 20 sub-surface gas injection points. The maximum number of gas injection points is dependent upon the area of aquifer to be remediated.

Preferably, the oxygen-containing gas is delivered to the aquifer at at least two sub-surface gas injection points, by means of at least two gas injectors having respective perforated sections located at at least two different depths within the aquifer for example at a first depth of from 5 to 15 ft (1.5 m - 4.5 m) preferably 10 to 15 ft (3-1.5 m) and a second depth of 16-25 ft (4.8 - 7.5 m), preferably 16 - 20 ft (4.8 - 6 m).

The oxygen injection is conveniently conducted in a way designed to minimize gas injection, contaminant volatilization, and water permeability reduction while maintaining the desired dissolved oxygen level.

As one aspect of the present process, the minimum average volume [V - given in cubic feet of gas] (cubic meter of gas) of total oxygen injected each time at each injecting point can be calculated by the following formula:

$$V = 0.1 \times A \times T \div N$$

Wherein,

A = treated area [square ft] (m$^2$)
T = treatment thickness [ft] (m)
N = number of injection points

It is understood that when the oxygen-containing gas is not relatively pure oxygen, such as air, the volume of gas injected shall be adjusted according to the oxygen content of the oxygen-containing gas.

The volume of oxygen injected is preferably 1-100, more preferably 1.25-5, most preferably 1.25-3 times of V (minimum average volume).

As an illustrative non-limiting example, a 100 square ft (9.3 m$^2$) by 12 ft (3.6 m) treatment zone with 30 oxygen injection point will require at least about 4 cubic feet (0.1 m$^3$) of oxygen per injection point, preferably 5-400 cubic feet (0.125-10 m$^3$), more preferably 5-8 cubic feet (0.125-0.2 m$^3$).

The frequency for oxygen-containing gas injection may be variable and may be adjusted on a site-specific basis. Preferably it is from once a week to 10 times per day, preferably from once a day to 8 times a day, more preferably from 2 times day to about 4 times a day.

Preferably the duration of each injection of oxygen-containing gas at each injection points last from 0.05 to 4 minutes, preferably from 0.1 to 3 minutes, still more preferably from 0.3 to 1.5 minutes. As an illustrative non-limiting example, the oxygen-containing gas is delivered at from 1 to 20 (0.025 - 0.5 m$^3$), preferably from 2 to 10 (0.05 - 0.25 m$^3$), more preferably from 3 to 8 (0.075 - 0.2 m$^3$) cubic feet for from 0.1 to 3 minutes. As a preferred illustrative example, the oxygen-containing gas is injected at the injection site at about 4 cubic feet per minute (i.e. 260 cubic feet per hour) [0.1 m³ per minute (i.e. 6.5 m³ per hour)] for 0.5 minute for each injection.

The concentration of the culture delivered and contained in the treatment zone will depend on the strength and activity of the culture. An example of a culture which my be conveniently used in the present invention is mixed culture ATCC No. 202057 which is prepared from an activated sludge retrieved from the biotreater of the south Effluent treater for treating wastewater from the Chemical Plant of Shell Deer Park Manufacturing complex located at 5900 Highway 225, Deer Park, Texas 77536, USA, as described in U.S. Patent No. 5,750,364 at column 6, line 32 to column 7, line 8. Samples of mixed culture ATCC No. 202057 are available from the permanent collection of the ATCC, Patent Depository, 12301, Parklawn Drive, Rockville, M.D. 20852, USA.

Where MTBE remediation using the mixed bacterial culture ATCC No. 202057 is conducted, the concentration of the bacterial culture used is preferably greater than 100 mg, more preferably greater than 200 mg, more preferably greater than 250 mg, dry wt of cells/ kg of soil.

The culture may conveniently be delivered to the sub-surface in an injection slurry. The concentration of the culture contained in the injection slurry is generally within the range 100- 10,000mg Total Suspended Solids (TSS)/L, preferably in the range 200-5000 mg/L, and still more preferably in the range 500 - 4000 mg/L.

The apparatus for delivering bacterial slurry may be, but is not limited to, injection wells, infiltration galleries e.g. via trenches or drains, direct injection under pressure through open-ended pipes. The apparatus is preferably designed to deliver bacterial slurry effectively to distribute well through the treated zone in a fast enough fashion to prevent settling of the culture in the delivery system to prevent plugging of the apparatus, preferably sufficiently fast with sufficient pressure to reach the treatment area far enough from the injection site, more preferably with sufficient pressure and/or speed to alter/fracture/crush the soil structure to create a highway for the bacterial culture to reach out farther in the treatment zone. As a non-limiting examples, where injection concentrations are more than 1000 mg dry wt of cells per liter of solution, an open-ended pipe under pressure of at least 10 psig (0.7 Bar gauge) preferably at least 20 psig (1.4 Bar gauge), more preferably at least 40 psig (2.8 Bar gauge), most preferably at least 75 psig (5.1 Bar gauge) greater than the hydrostatic head pressure is used. For injection concentration of less than 1000 mg dry wt of cells per liter of solution, injection wells, infiltration galleries may suffice; if so, it is preferably set-up in a net-work or galleries of delivery conduits.

Conveniently, the bacterial culture may be delivered to the treatment zone by means of a network of a plurality of delivery conduits at a pressure of at least 10 psig (0.7 Bar gauge) greater than the hydrostatic head pressure at the points of bacterial culture injection.

Groundwater monitoring points may be constructed from perforated and non-perforated conduit. When this is the case, it is preferred that the perforated conduit section be limited to the depth interval of interest for monitoring. Dissolved oxygen sensors may be placed in situ, in groundwater monitoring points, or above-ground. If above-ground, they will be coupled with a groundwater pumping system for bringing small quantities of groundwater above-ground from groundwater monitoring wells. Groundwater monitoring points placed down-gradient of the target treatment zone may also be used to monitor the disappearance of the contaminants.

Delivery of the bacterial culture to the treatment zone may be achieved through: a) use of injection wells, b) infiltration via trenches or drains, c) direct injection under pressure through open-ended pipes. It is preferable that sufficient culture be delivered initially as it is not generally expected that the degrading activity in the treatment zone will increase with time.

As a preferred embodiment of the present process for remediating MTBE and/or TBA in the aquifer (groundwater, saturated zone, water-bearing zone, subsoil), a mixed bacterial culture or pure bacterial culture described in US Patents No. 5,750,364, US 5,811,010 and 5,902,734, is used.

A particularly preferred embodiment of the invention comprises a method for in situ remediation of MTBE in an aquifer having a treatment zone through which passes water contaminated with MTBE, which method comprises:

a) injecting, by a plurality of conduits spaced at less than 6 ft (1.8 m) apart having respective perforated sections located at least two different depths within the aquifer, an oxygen-containing gas at a pressure of at least 5 psig (0.35 Bar) above the hydrostatic pressure at injection points for about 0.1 to about 3 minutes at a frequency of from about once a week to about ten times a day;

b) delivering to the treatment zone, by a plurality of delivery conduits at a pressure of at least 10 psig (0.7 Bar) greater than the hydrostatic head pressure at point(s) of injection, a microbial culture capable of degrading MTBE to carbon dioxide and water;

wherein the dissolved oxygen concentration in the treatment zone is greater than 18 mg/L; the oxygen-containing gas is stored in at least one gas storage tank and subsequently is delivered to at least one sub-surface injection point by intermittent pulsed injection; relatively uniform aerobic conditions is maintained in the treatment zone by monitoring the oxygen flow from the or each gas storage tank to the or each sub-surface gas injection point using at least one pressure gauge and/or gas flow meter; dissolved oxygen concentration in the treatment zone is monitored using ground water monitoring points and dissolved oxygen sensors; and the frequency and volume of each injection of oxygen-containing gas is adjusted by means of a controller associated with said monitoring equipment.

## BRIEF DESCRIPTION OF THE DRAWINGS

The present invention will be further understood from the following description of a preferred embodiment thereof, which is made, by way of example only, with reference to the accompanying drawings, in which:-

Fig. 1 is a cross-sectional view of an embodiment of this invention,

Fig. 2 is a plan view drawing of an embodiment of this invention,

Fig. 3 shows a general lay-out of the remediation scheme/plot of one illustrative embodiment of the present invention,

Fig. 4 illustrates the reduction of MTBE concentration in shallow monitoring points using the method of the present invention, and

Fig. 5 illustrates the reduction of MTBE concentration in deep monitoring points using the method of the present invention.

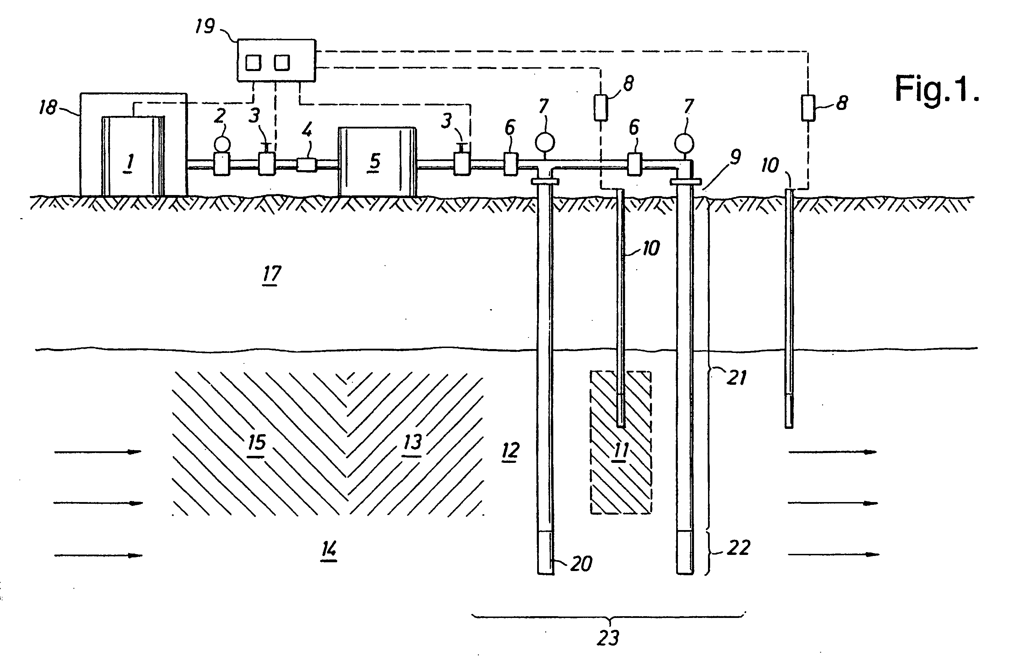

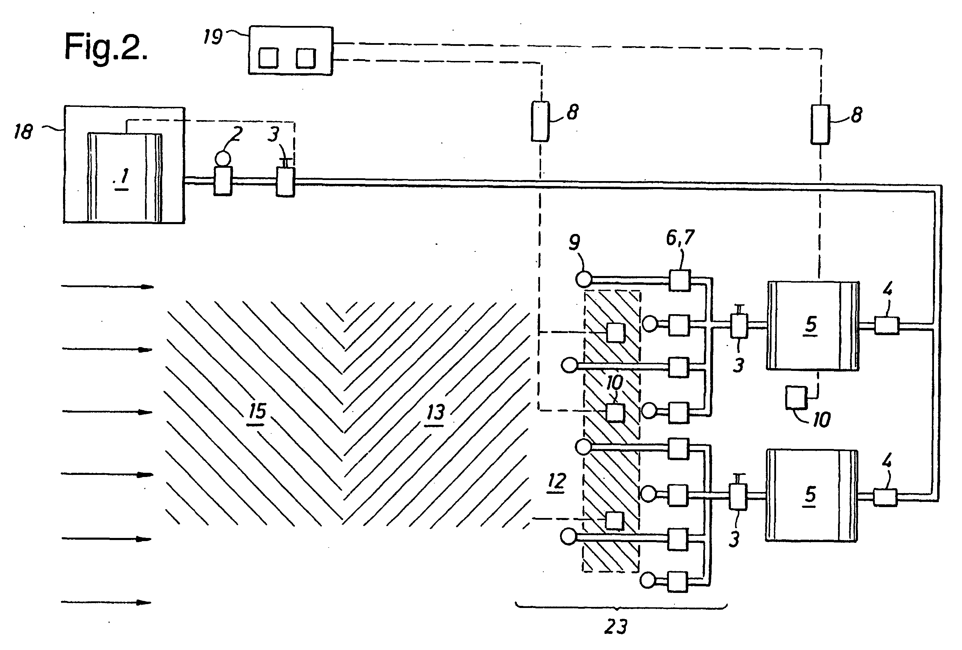

Figs. 1 and 2, depict an embodiment of the invention. The embodiment comprises a source of oxygen-containing gas **1** connected to at least one subsurface gas injector **9.** The oxygen-containing gas is delivered to an aquifer **14** to create at least one oxygenated zone **12**. To the at least one oxygenated zone, a bacterial culture **11** capable of degrading the contaminants, for example mixed culture ATCC No. 202057 (hereinafter referred to as BC-4) is delivered to create a treatment zone **23**. Contaminated groundwater, contaminated with alkyl ethers (such as MTBE) and/or alkyl alcohols (such as TBA) **13** flows from contaminated aquifer soils **15** to the treatment zone **23**. As contaminated groundwater passes through the treatment zone **23**, it is purified by biodegradation, and the alkyl ethers and/or TBA are converted to non-toxic carbon dioxide and water.

The oxygen-containing gas source **1** is housed in an enclosure **18**. The oxygen-containing gas source **1** is comprised of commercially-available oxygen gas generators. The or each sub-surface gas injection point **20** is located in an oxygen delivery well which contains the or each gas injector **9** which is connected to the oxygen containing gas source **1**. The or each gas injector comprises a first section of non-perforated conduit **21** and a second section of perforated conduit **22**, the section of perforated conduit extending below the treatment zone **23**.

The embodiment comprises an oxygen-containing gas delivery system designed for intermittent pulsed injection of an oxygen-containing gas, such as air or pure oxygen. The pulses of oxygen-containing gas are delivered through the or each gas injector **9**. The desired injection pressure of the oxygen-containing gas is controlled with gas pressure regulators **2**. The injection pressure is set greater than the hydrostatic head of water in the or each gas injector **9**; which is roughly 0.5 psig (pound-force/square inch-gauge) per foot of depth (0.115 Bar per meter depth) between the water table elevation and the top of the perforated section of the or each gas injector in the oxygen delivery well.

The delivery pressure is set to be at least 10 psig (0.7 Bar gauge) greater than the hydrostatic head of water. Typical delivery pressures are in the 20 - 40 psig (1.4 Bar - 2.8 Bar gauge) range. Gas storage tanks **5**, are used to store the oxygen-containing gas between injection cycles. The gas storage tanks **5** are sized to contain the desired gas injection volume at the desired gas injection pressure. Solenoid valves **3** and back-flow check valves **4** control the flow of gas from the oxygen-containing gas source **1** to the gas injectors **9**.

System monitoring and control is provided by means of pressure gauges **7** and gas flow meters **6** that are used to ensure gas delivery to each injector is occurring. At least one pressure gauge **7** is employed for each gas storage tank. In addition, groundwater monitoring points **10** and dissolved oxygen sensors **8** are used to monitor dissolved oxygen concentrations in the target treatment zone **23**. Based on the data obtained with said monitoring equipment, the frequency and volume of the intermittent pulsed injections of oxygen-containing gas are adjusted through use of a controller **19** associated with said monitoring equipment. The controller may be a simple system of manual valves, but will preferably comprise electronic timers, and/or automatic control systems integrated with in situ oxygen sensors. Through use of system monitoring and control, the frequency of the intermittent pulsed oxygen-containing gas injections is minimized.

The gas injectors **9** comprise a first section of perforated **22** and second section of non-perforated conduit **21**. The non-perforated conduit **21** extends below the target treatment zone **23,** and is installed so as to prevent the short-circuiting of oxygen-containing out of the aquifer, for example into the vadose zone **17**. The perforated section **22** of the injector **9** is placed below the target treatment zone **23**, and is aligned vertically as shown in FIG. 1.

In operation the dissolved oxygen concentration (DOC) in the aquifer treated (treatment zone) is maintained at preferably greater than 18 mg/L by means of pulsed oxygen gas delivery.

The pressure of the oxygen-containing storage tanks is set at at least 20 psig (1.4 Bar gauge) above the hydrostatic pressure at the injection points.

Groundwater monitoring points 10 are also constructed from perforated and non-perforated conduit. The perforated conduit section of the groundwater monitoring point is limited to the depth interval of interest for monitoring. Dissolved oxygen sensors **8** are placed in situ, in the groundwater monitoring points, and above-ground. When above-ground, they are coupled with a groundwater pumping system for bringing small quantities of groundwater above-ground from the groundwater monitoring points **10**. Additionally groundwater monitoring points placed down-gradient of the target treatment zone are used to monitor the disappearance of the alkyl ethers and TBA.

Delivery of the bacterial culture **11** to the treatment zone may be achieved through: a) use of injection wells, b) infiltration via trenches or drains, c) direct injection under pressure through open-ended pipes. It is critical that sufficient culture be delivered initially as it is not typically expected that the degrading activity in the treatment zone will increase with time.

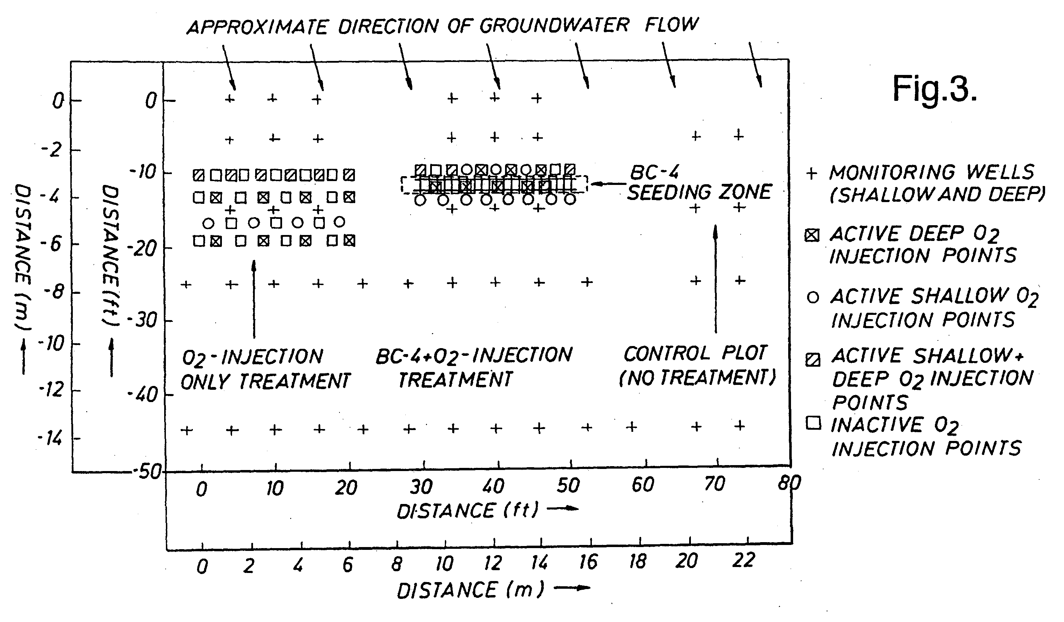

The embodiment of the present invention depicted in Fig. 1 and Fig. 2 was tested at the pilot-scale plant at the U.S. Navy CBC Base in Port Hueneme, California, USA. The general lay-out of the demonstration plot is shown in Fig. 3. Three test cells were constructed to evaluate the performance of this invention relative to two controls. The center plot contains the illustrative embodiment of this invention. The plots on either side contain: a) a control plot (only monitoring), and b) a plot into which only oxygen gas is injected.

At this site the target treatment zone is roughly 5-ft long x 20-ft wide x 12-ft deep (1.5 m x 6 m x 3.6 m). 1400 gallons (5292 liters) of mixed culture having ATCC No. 202057 (hereinafter referred to as BC-4) containing roughly 1000 mg total suspended Solids (TSS)/L were injected into this zone through the open end of rigid pipe. The pipe was driven down to the bottom of the target treatment zone and then slowly raised as the mixed culture (BC-4) was injected under pressure. Injections were made every 1-ft (0.3 m) along the length of the treatment zone and approximately 5 gallons (18.9L) of mixed culture were injected for every 1-ft (0.3 m) rise of the injection pipe.

The oxygen delivery system consisted of roughly 40 oxygen injectors distributed as shown in Fig. 3. Each was constructed from non-perforated 3/4-inch (1.9 cm) diameter PVC pipe to which was attached either a 2-ft (0.6 m) or 1-ft (0.3 m) perforated section at the end. The injectors were installed using commercially-available direct-push well installation methods. Perforated sections were either placed from 17 to 19 ft (5.1 to 5.7 m) below ground surface (hereinafter referred to as "deep oxygen delivery wells"), or from 14 to 15 ft (4.2 to 2.5 m) below ground surface (hereinafter referred to as "shallow oxygen delivery wells"). Groundwater monitoring wells were constructed and installed in the same fashion, except they had 5-ft (1.5 m) perforated sections placed at either 15 to 20 ft (4.5 to 6 m) below ground surface (hereinafter referred to as "deep wells") or 10 to 15 ft (3 to 4.5 m) below ground surface (hereinafter referred to as "shallow wells").

The oxygen gas source was a commercially-available oxygen gas generator capable of generating up to 80 SCFM (standard cubic feet/minute). It was connected via a sequence of timers, pressure regulators, and solenoid valves to eight gas storage vessels. Each storage vessel had an internal volume of roughly 8 cubic feet (0.07 cubic meter); when pressurized to 30 psig (2.1 Bar gauge), each contained approximately 24 cubic feet (0.22 cubic meter) of pure oxygen gas (at normal atmospheric pressure). Each storage vessel was connected via electronic solenoid valves to three to five oxygen delivery wells. Timers were set so that oxygen gas could be delivered anywhere from one to eight times per day.

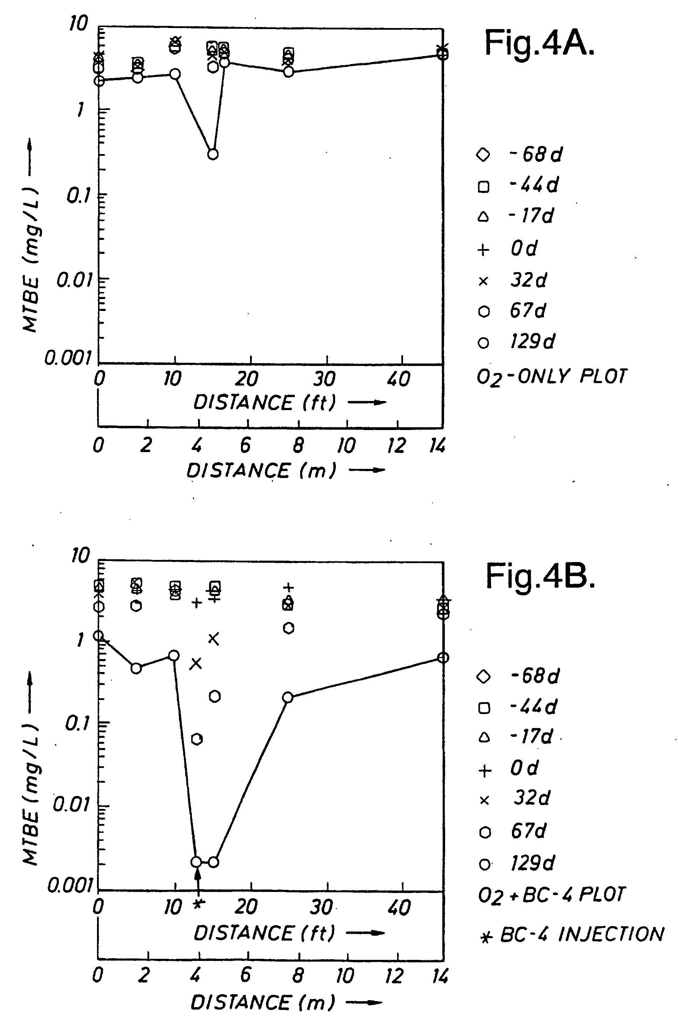

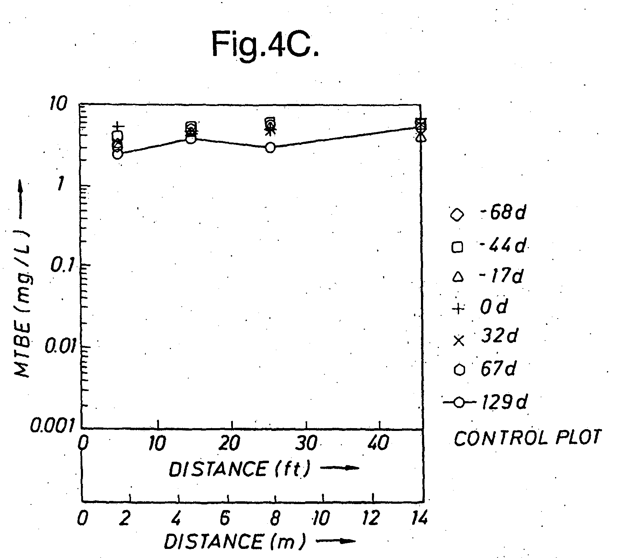

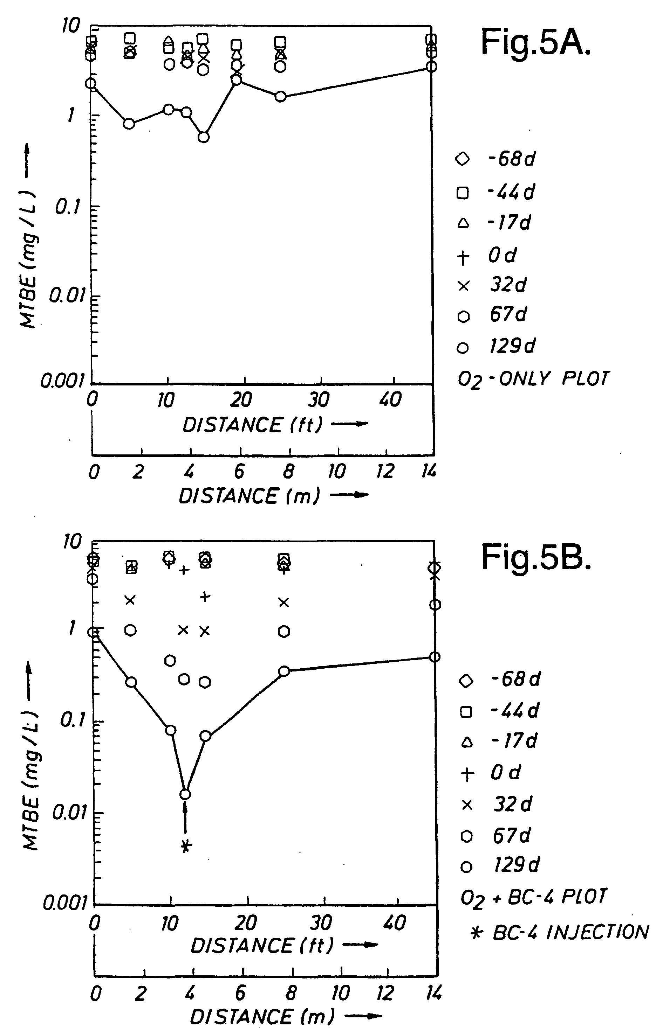

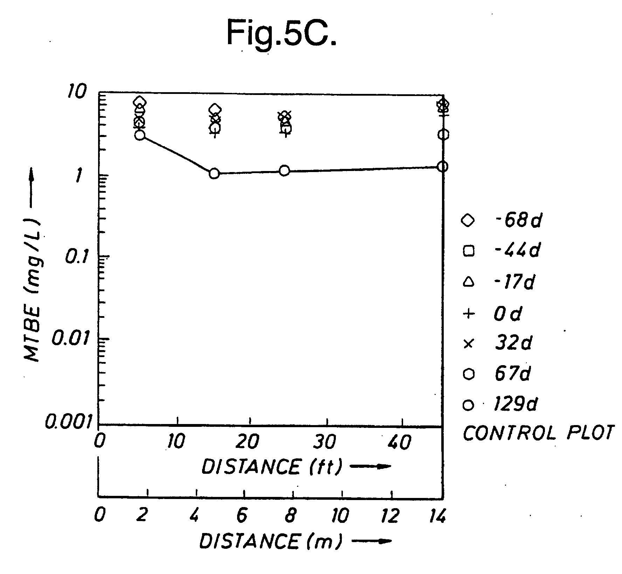

Figs. 4a, 4b, 4c and 5a, 5b, 5c display MTBE concentrations vs. distance from the top of each treatment plot for various times prior to, and after BC-4 injection. For reference, the times shown are measured relative to the date of BC-4 seeding; thus, t = -44 d corresponds to the start of the oxygen delivery system and t=0 corresponds to BC-4 seeding. Each figure depicts a transect along the direction of groundwater flow for one of the study plots (i.e., oxygen injection-only, BC-4 and oxygen injection, and the control plot). For each distance along a given transect, the geometric mean of the measured concentrations is displayed in Figs. 4 and 5.

For all the plots and all distances along the transects, MTBE concentrations are relatively stable for all times prior to the BC-4 seeding (t=0 in Figures 4 and 5). The operation of the oxgyen injection system increased dissolved oxygen concentrations. However, oxygen injection alone had little effect on MTBE concentrations in any plot.

Following BC-4 seeding and continued operation of the oxygen injection system for the next 67 days, decreases in MTBE concentrations are observed in the BC-4 and oxygen injection plot. Immediately down-gradient of the BC-4 seeded zone MTBE concentrations decrease greater than 90%, and other less dramatic declines in MTBE were observed up-gradient of the seeded region. In comparison, no significant changes are observed in MTBE concentrations in the oxygen injection-only or control plots.

In summary, the time series data clearly show the present invention, effectively provides a biobarrier to MTBE migration, and effectively reduces the MTBE contamination in the aquifers.

**Claims**

1. A method for in situ remediation of an aquifer having a zone through which passes water contaminated with at least one contaminant which is methyl t-butyl ether (MTBE) and/or t-butyl alcohol (TBA), which method comprises, a) delivering to the zone in the aquifer an oxygen-containing gas at a pressure of at least 5 psi (0.35 Bar) above hydrostatic pressure at point of delivery by pulsed injection at a frequency in the range of from once per week to 10 times per day, and b) delivering to the zone in the aquifer a non-indigenous microbial culture capable of degrading the at least one chemical contaminant. 2.

2.  A method according to claim 1, which comprises delivering the oxygen-containing gas to the zone in the aquifer at least one sub-surface gas injection point to create an oxygenated zone, subsequently delivering the microbial culture to the oxygenated zone to create a treatment zone, and wherein contaminated groundwater passes through the treatment zone and is remediated.

3.  A method according to claim 1 or 2, which comprises storing the oxygen-containing gas in at least one gas storage tank and subsequently delivering the oxygen-containing gas at the at least one sub-surface injection point by intermittent pulsed injection.

4.  A method according to claim 3, which comprises maintaining relatively uniform aerobic conditions in the treatment zone by monitoring the oxygen flow from the or each gas storage tank to the or each sub-surface gas injection point using at least one pressure gauge and/or gas flow meter, monitoring dissolved oxygen concentration in the treatment zone using ground water monitoring points and dissolved oxygen sensors, and adjusting the frequency and volume of the intermittent pulsed injections of oxygen-containing gas by means of a controller associated with said monitoring equipment.

5.  A method according to any one of claims 1-4, which comprises delivering the oxygen-containing gas to the or each sub-surface gas injection point by means of at least one gas injector, the or each sub-surface gas injection point being associated with one gas injector, which the or each gas injector comprise a first section of perforated conduit and a second section of non-perforated conduit, wherein the section of perforated conduit extends below the treatment zone.

6.  A method according to any one of claims 1-5, which comprises maintaining the dissolved oxygen concentration in the treatment zone at greater than 2 mg/L.

7.  A method according to any one of claims 1-6, which comprises delivering a microbial culture to the oxygenated zone in an injection slurry having a concentration of 100-10,000 mg/L.

8.  A method according to any one of claims 1-7, which comprises delivering the oxygen-containing gas to the aquifer at at least two sub-surface gas injection points which are spaced less than 6 meters apart.

9.  A method according to claim 8, which comprises delivering the oxygen-containing gas to the aquifer at at least two sub-surface gas injection points, by means of at least two gas injectors having respective perforated sections located at at least two different depths within the aquifer.

**Patentansprüche**

1.  Verfahren zur in situ-Sanierung eines Grundwasserträgers, der eine Zone aufweist, durch die mit wenigstens einer Verunreinigung, bei der es sich um Methyl-tert.-butylether (MTBE) und/oder tert.-Butylalkohol (TBA) handelt, verunreinigtes Wasser hindurchtritt, welches Verfahren a) ein Zuführen eines sauerstoffhältigen Gases bei einem Druck von wenigstens 5 psi (0,35 bar) über dem hydrostatischen Druck am Abgabepunkt durch gepulste Injektion mit einer Frequenz im Bereich von ein mal pro Woche bis zu zehnmal pro Tag zu der Zone in dem Grundwasserträger und b) ein Zuführen einer nicht-indigenen Mikrobenkultur, die zum Abbauen der wenigstens einen chemischen Verunreinigung befähigt ist, zu der Zone in dem Grundwasserträger umfaßt.

2.  Verfahren nach Anspruch 1, das ein Zuführen des sauerstoffhältigen Gases zu der Zone in dem Grundwasserträger an wenigstens einem unterirdischen Gasinjektionspunkt zur Schaffung einer oxygenierten Zone, ein anschließendes Zuführen der Mikrobenkultur zu der oxygenierten Zone zur Schaffung einer Behandlungszone umfaßt und worin verunreinigtes Grundwasser durch die Behandlungszone hindurchtritt und saniert wird.

3.  Verfahren nach Anspruch 1 oder 2, das ein Lagern des sauerstoffhältigen Gases in wenigstens einem Gaslagertank und ein anschließendes Zuführen des sauerstoffhältigen Gases zu dem wenigstens einen unterirdischen Injektionspunkt durch intermittierende gepulste Injektion umfaßt.

4.  Verfahren nach Anspruch 3, das ein Aufrechterhalten von verhältnismäßig einheitlichen aeroben Bedingungen in der Behandlungszone durch Überwachen des Sauerstoffstroms aus dem oder aus jedem Gaslagertank zu dem oder zu jedem unterirdischen Gasinjektionspunkt unter Anwendung wenigstens einer Druckanzeige und/oder Gasströmungsmeßanzeige, ein Überwachen der Konzentration an gelöstem Sauerstoff in der Behandlungszone unter Anwendung von Grundwasserüberwachungsstellen und Sensoren für gelösten Sauerstoff und ein Einstellen der Frequenz und des Volumens der intermittierenden gepulsten Injektionen von sauerstoffhältigem Gas mittels eines mit dieser Überwachsungsausrüstung verbundenen Reglers umfaßt.

**5.** Verfahren nach einem der Ansprüche 1 bis 4, das ein Zuführen des sauerstoffhältigen Gases zu dem oder zu jedem unterirdischen Gasinjektionspunkt mittels wenigstens eines Gasinjektors umfaßt, wobei der oder jeder unterirdische Gasinjektionspunkt mit einem Gasinjektor in Verbindung steht, wobei der oder jeder Gasinjektor einen ersten Abschnitt aus einer perforierten Leitung und einen zweiten Abschnitt aus einer nicht-perforierten Leitung umfaßt, worin sich der Abschnitt aus perforierter Leitung unter die Behandlungszone erstreckt.

**6.** Verfahren nach einem der Ansprüche 1 bis 5, das ein Aufrechterhalten der Konzentration an gelöstem Sauerstoff in der Behandlungszone auf größer als 2 mg/l umfaßt.

**7.** Verfahren nach einem der Ansprüche 1 bis 6, das eine Abgabe einer Mikrobenkultur an die oxygenierte Zone in einer Injektionsaufschlämmung mit einer Konzentration von 100 bis 10.000 mg/l umfaßt.

**8.** Verfahren nach einem der Ansprüche 1 bis 7, das ein Abgeben des sauerstoffhältigen Gases an den Grundwasserträger an wenigstens zwei unterirdischen Gasinjektionsstellen umfaßt, die weniger als 6 m Abstand voneinander haben.

**9.** Verfahren nach Anspruch 8, das ein Abgeben des sauerstoffhältigen Gases an den Grundwasserträger an wenigstens zwei unterirdischen Gasinjektionsstellen mittels wenigstens zweier Gasinjektoren umfaßt, die ihre jeweiligen perforierten Abschnitte an wenigstens zwei verschiedenen Tiefen innerhalb des Grundwasserträgers angeordnet haben.

**Revendications**

**1.** Procédé pour l'assainissement in situ d'une couche aquifère comportant une zone à travers laquelle passe de l'eau contaminée avec au moins un contaminant qui est l'éther méthyl t-butylique (MTBE) et/ou l'alcool t-butylique (TBA), lequel procédé comprend a) l'amenée dans la zone de la couche aquifère d'un gaz contenant de l'oxygène à une pression d'au moins 5 livres par pouce carré (0,35 bar) au-dessus de la pression hydrostatique au point d'amenée par injection pulsée à une fréquence allant d'une fois par semaine à dix fois par jour, et b) l'amenée dans la zone de la couche aquifère d'une culture microbienne non indigène pouvant dégrader au moins le contaminant chimique.

**2.** Procédé suivant la revendication 1, qui comprend l'amenée du gaz contenant de l'oxygène à la zone de la couche aquifère en au moins un point d'injection de gaz en profondeur pour créer une zone oxygénée, ensuite l'amenée de la culture microbienne à la zone oxygénée pour créer une zone de traitement, et dans lequel l'eau souterraine contaminée traverse la zone de traitement et est assainie.

**3.** Procédé suivant l'une ou l'autre des revendications 1 et 2, qui comprend le stockage du gaz contenant de l'oxygène dans au moins un réservoir de stockage de gaz et ensuite l'amenée du gaz contenant de l'oxygène en au moins le point d'injection en profondeur par une injection pulsée intermittente.

**4.** Procédé suivant la revendication 3, qui comprend le maintien de conditions aérobies relativement uniformes dans la zone de traitement en contrôlant la circulation d'oxygène du ou de chaque réservoir de stockage au ou à chaque point d'injection de gaz en profondeur en utilisant au moins une jauge de pression et/ou un débitmètre de gaz, le contrôle de la concentration d'oxygène dissous dans la zone de traitement en utilisant des points de contrôle d'eau souterraine et des détecteurs de l'oxygène dissous, et l'ajustement de la fréquence et du volume des injections pulsées intermittentes de gaz contenant de l'oxygène au moyen d'un dispositif de commande associé à l'équipement de contrôle précité.

**5.** Procédé suivant l'une quelconque des revendications 1 à 4, qui comprend l'amenée du gaz contenant de l'oxygène au ou à chaque point d'injection de gaz en profondeur au moyen d'au moins un injecteur de gaz, le ou chaque point d'injection de gaz en profondeur étant associé à un injecteur de gaz, lequel ou chaque injecteur de gaz comprend une première section de conduit perforé et une seconde section de conduit non perforé, dans lequel la section de conduit perforé s'étend en dessous de la zone de traitement.

**6.** Procédé suivant l'une quelconque des revendications 1 à 5, qui comprend le maintien de la concentration d'oxygène dissous dans la zone de traitement à plus de 2 ml/l.

**7.** Procédé suivant l'une quelconque des revendications 1 à 6, qui comprend l'amenée d'une culture microbienne à la zone oxygénée dans une suspension d'injection ayant une concentration de 100-10.000 mg/l.

**8.** Procédé suivant l'une quelconque des revendications 1 à 7, qui comprend l'amenée du gaz contenant de l'oxygène à la couche aquifère en au moins deux points d'injection de gaz en profondeur qui sont séparés de moins de 6 mètres.

**9.** Procédé suivant la revendication 8, qui comprend l'amenée du gaz contenant de l'oxygène à la couche aquifère en au moins deux points d'injection de gaz en profondeur, au moyen de deux injecteurs de gaz comportant des sections perforées respectives positionnées en au moins deux profondeurs différentes dans la couche aquifère.

Fig.1.

EP 1 169 271 B1

Fig.2.

Fig.3.

APPROXIMATE DIRECTION OF GROUNDWATER FLOW

BC-4 SEEDING ZONE

O₂-INJECTION ONLY TREATMENT

BC-4+O₂-INJECTION TREATMENT

CONTROL PLOT (NO TREATMENT)

DISTANCE (m) ←
DISTANCE (ft) ↑
DISTANCE (m) ←

DISTANCE (ft) →

DISTANCE (m) →

+ MONITORING WELLS (SHALLOW AND DEEP)

⊠ ACTIVE DEEP O₂ INJECTION POINTS

○ ACTIVE SHALLOW O₂ INJECTION POINTS

▨ ACTIVE SHALLOW+ DEEP O₂ INJECTION POINTS

□ INACTIVE O₂ INJECTION POINTS

EP 1 169 271 B1

Fig.4A.

◇ -68 d
□ -44 d
△ -17 d
+ 0 d
× 32 d
○ 67 d
○ 129 d
$O_2$-ONLY PLOT

Fig.4B.

◇ -68 d
□ -44 d
△ -17 d
+ 0 d
× 32 d
○ 67 d
○ 129 d
$O_2$ +BC-4 PLOT

∗ BC-4 INJECTION

# Fig.4C.

Fig.5A.

◇  -68d
□  -44d
△  -17d
+  0d
×  32d
○  67d
○  129d
$O_2$ - ONLY PLOT

Fig.5B.

◇  -68d
□  -44d
△  -17d
+  0d
×  32d
○  67d
○  129d
$O_2$ + BC-4 PLOT
*  BC-4 INJECTION

17

## Fig.5C.